# EUROPÄISCHE PATENTSCHRIFT

(11) **EP 0 717 371 B1**
(45) Veröffentlichungstag und Bekanntmachung des Hinweises auf die Patenterteilung: **17.10.2001**
(21) Anmeldenummer: 95119842.3
(22) Anmeldetag: 15.12.1995
(51) Int. Cl.: G06K 19/077

(54) **Verfahren und Vorrichtung zum Herstellen von Chipkarten und Chipkarte**
Manufacturing method and device for chip cards and chip card
Méthode et procédé de fabrication de cartes à puce et carte à puce

(30) Priorität: 15.12.1994 DE 4444789
(43) Veröffentlichungstag der Anmeldung: 19.06.1996
(73) Patentinhaber: ODS Landis & Gyr GmbH & Co. KG, 85375 Neufahrn (DE)
(72) Erfinder: Schmidt, Frank-Thomas, Dr., Dipl.-Chem., D-99891 Fischbach (DE)
(74) Vertreter: Grünecker, Kinkeldey, Stockmair & Schwanhäusser Anwaltssozietät

(56) Entgegenhaltungen:
- EP-A- 0 390 046
- EP-A- 0 691 626
- DE-C- 4 229 639
- US-A- 5 057 679
- PATENT ABSTRACTS OF JAPAN vol. 014, no. 447 (M-1029), 25.September 1990 & JP 02 178096 A (CITIZEN WATCH CO LTD), 11.Juli 1990,

## Beschreibung

Die Erfindung betrifft ein Verfahren gemäß Oberbegriff des Patentanspruchs 1, sowie eine Vorrichtung gemäß Oberbegriff des Patentanspruchs 9.

Ein derartiges Verfahren und eine derartige Vorrichtung sowie eine nach dem Verfahren hergestellte Chipkarte sind aus der DE-C-42 29 639 bekannt. Vor dem Einfügen des Chipkartenmoduls in die Vertiefung wird in der Vertiefung des Chipkartenkörpers mit einer Kanüle ein Cyanacrylatkleber (Sekundenkleber) aufgetragen, ehe der Modul zur Herstellung der Verbindung und Einstellung seiner Höhenlage in der Vertiefung mit Druck eingepresst wird. Aufgrund der chemischen Eigenschaften von Cyanacrylatklebern, durch Diffusion des Klebstoffes oder bestimmter Komponenten ergeben sich Veränderungen im Verbindungsbereich und insbesondere Versprödungen im Randbereich der Vertiefung. Diese Versprödungen sind unerwünschte Inhomogenitäten in der Chipkarte, die im Gebrauch und beim Biegen der Chipkarte Risse hervorrufen können.

Bei einem aus US-A-5 057 679 bekannten Verfahren wird der Chipkartenmodul in der Kartenvertiefung mittels eines thermisch aktivierbaren Klebers festgelegt. Der Modul wird bis in die Endposition gedrückt, dann wird der Kleber thermisch beaufschlagt, z.B. durch Ultraschall oder durch IR-Licht. Diese thermische Behandlung wirkt unerwünscht auch auf die elektronischen Komponenten des Chipkartenmoduls und den Chipkartenkörper.

Bei einem aus EP-A-0 390 046 bekannten Verfahren zum Anhaften eines Halbleiterelementes an eine Leiterplatte aus Quarzglas wird das Halbleiterelement aufgeklebt, um Kontaktstellen miteinander zu koppeln und das Halbleiterelement festzulegen. Dabei wird mit einem Fottosetting-Harz gearbeitet, das auf der Leiterplatte bei positioniertem Halbleiterelement durch eine Aussparung einer Arbeitsfläche und durch die Quarzglas-Leiterplatte mit UV-Licht beaufschlagt wird.

Bei einem aus JP 02 17 8096 A bekannten Verfahren wird die bedruckte Oberfläche des Chipkartenmoduls mit einem Harz abgedeckt, das auch zum Fixieren des Moduls in der Vertiefung des Kartenkörpers benutzt wird. Nach dem Einsetzen des Chipkartenmoduls wird das Harz mit UV-Strahlung behandelt.

In EP-A-0 691 626 mit älterem Zeitrang wird vorgeschlagen, den Chipkartenmodul in der Vertiefung des Kartenkörpers mittels einer Verguss- oder Klebemasse zu fixieren, die nach dem Einsetzen des Moduls von der Kartenrückseite her mit thermisch wirksamen Elektronenstrahlen gehärtet wird.

Der Erfindung liegt die Aufgabe zugrunde, ein Verfahren und eine Vorrichtung zum Durchführen des Verfahrens anzugeben, bei denen auch in Serienproduktion auf kostengünstige Weise eine hohe Qualität der Chipkarten im Hinblick auf geometrische Genauigkeit, Formstabilität und Gebrauchseigenschaften über lange Gebrauchsdauer möglich ist.

Die gestellte Aufgabe wird erfindungsgemäß mit dem Verfahren gemäß Patentanspruch 1 und der Vorrichtung gemäß Patentanspruch 9 gelöst.

Bei dem Verfahren werden die Chipkartenmodule, die in Einzel-, Flächen-, Streifen- oder Rollenverband verarbeitet werden, sehr zuverlässig und präzise mit Chipkartenkörpem vereinigt. Zum Herstellen der dauerhaft haltbaren und gleichmäßigen Verbindung ist kein zusätzliches lokales oder ganz- oder teilflächiges Erwärmen des Moduls und/oder des Chipkartenkörpers mehr notwendig, so dass Deformationen auf der dem Modul gegenüberliegenden Seite des Chipkartenkörpers vermieden werden. Durch die beim Einfügen noch flüssige Konsistenz des UV-strahlungs- und druckhärtbaren Klebstoffs lässt sich der Modul sehr genau mit relativ geringem Druck in der Vertiefung positionieren, und in der Höhe bündig mit der Oberfläche des Chipkartenkörpers einstellen. Der Klebstoff härtet nach dem Bestrahlen und unter dem Einfügedruck rasch aus. Dies hat den Vorteil, dass einerseits zum Einfügen des Chipkartenmoduls genügend Zeit gewonnen wird, und andererseits die Aushärtung des Klebstoffs nach dem Andrücken des Chipkartenmoduls weitgehend abgeschlossen ist.

Die erreichte Verbindung ist nach Abschluss des Härteprozesses hochbelastbar. Das Verfahren ist mit vertretbarem Energieaufwand betreibbar. Der verwendete Klebstoff zeichnet sich durch ein Elastizitätsverhalten aus, mit dem später kritische Versprödungen in der Chipkarte vermieden werden. Die Chipkarte weist ein gleichförmiges Biegeverhalten über ihre gesamte Fläche auf. Es sind keine Inhomogenitäten in der Chipkarte feststellbar.

Mit der Vorrichtung lassen sich vollautomatisch stabile, geometrisch sehr genaue und über lange Standzeiten hochbeanspruchbare und langlebige Verbindungen zwischen den Modulen und den Chipkartenkörpern, vor allem in Serienproduktion, herstellen, wobei die Strahlungsquelle mit ihren UV-Strahlen und die Andruckvorrichtung ohne unerwünschte thermische Belastungen der Chipkarte bzw. der elektronischen Komponenten den Klebstoff aktivieren.

Gemäß Anspruch 2 wird eine Verzögerung so eingestellt, dass genügend Zeit zum korrekten Einfügen, Andrücken und Positionieren des Moduls gegeben ist. Der Klebstoff wird durch die UV-Strahlung noch vor dem Einfügen des Moduls aktiviert, ohne sich sofort zu verfestigen. Erst nach dem Andrücken und Fügen zur vollständigen Chipkarte reagiert der Klebstoff.

Beim Arbeiten mit dem Klebstoff gemäß Anspruch 3 wird der Klebstoff mit UV-Licht einer vorbestimmten Wellenlänge und beim Andrücken zuverlässig aktiviert. Der Klebstoff zeigt kein kritisches Versprödungsverhalten. Spricht der Klebstoff auf die UV-Bestrahlung spontan an, dann ist zwar nur eine sehr kurze Zeitspanne zum Einfügen und Andrücken nutzbar. Gegebenenfalls ist es dann zweckmäßig, den Modul bereits einzufügen, ehe bestrahlt wird. Der Klebstoff lässt sich aber auch mit einem verzögerten Polymerisationsverhalten einstellen, so dass dann genügend Zeit zum Einfügen, Positionieren und Andrücken des Chipkartenmoduls zur Verfügung steht. In diesem Fall kann bereits beim Dosieren und Auftragen, d.h. vor dem Einfügen, bestrahlt werden. Es kann sogar mit einem Schmelzklebstoff gearbeitet werden, der durch UV-Strahlen relativ spontan zum Aushärten aktivierbar und in ausgehärtetem Zustand duroplastisch ist.

Eine besonders zweckmäßige Verfahrensvariante geht aus Anspruch 4 hervor. Hierbei ist es unerheblich, wie lange das Einfügen, Eindrücken und Positionieren des Moduls dauert, weil der Klebstoff erst bei eingesetztem Modul endgültig aktiviert wird, und zwar mittels der den transparenten Teil des Chipkartenkörpers durchsetzenden Strahlen.

Gemäß Anspruch 6 lassen sich sehr kurze Taktzeiten und damit eine hohe Ausstoßrate an fertigen Chipkarten erreichen.

Mit dem Verfahrensschritt gemäß Anspruch 7 wird die Verbindung stabilisiert.

Bei der Chipkarte gemäß Anspruch 8 gewährleistet entweder eine transparente Rückenschicht oder ein transparentes Fenster im Chipkartenkörper die Übertragung der UV-Strahlen in den Klebstoff.

Bei der Ausführungsform der Vorrichtung gemäß Anspruch 10 wird durch die relative Beweglichkeit eine kurze Taktzeit erreicht und auch sichergestellt, dass der Chipkartenmodul schnell genug in die Vertiefung einfügbar ist.

Zweckmäßigerweise wird gemäß Anspruch 11 eine lineare Hin- und Herbewegung der Auflage gesteuert, um die notwendige Strahlendosis vor dem Einfügen einwirken zu lassen. Es ist aber auch denkbar, die Strahlenquelle relativ zur feststehenden Auflage zu bewegen.

Die Ausführungsform gemäß Anspruch 12 ist baulich einfach und ermöglicht das Aktivieren des Klebstoffs von der Rückseite des Chipkartenkörpers her durch den transparenten Teil der Chipkarte, nachdem oder während der Modul eingefügt wird.

Unter den vorstehend erwähnten UV-strahlungshärtbaren Klebstoffen sind spezielle Acrylate oder Epoxide zu verstehen, die im flüssigen Zustand unter Einfluss von UV-Strahlung geeigneter Wellenlänge und unter einem Fügedruck zur spontanen oder verzögerten Polymerisation und Verfestigung anregbar sind und dann durch sie benetzte Substrate dauerhaft miteinander verbinden. Besonders zweckmäßig sind duroplastische Klebstoffe, die eine spätere Manipulation an der Chipkarte durch Wärmebehandlung unmöglich machen. Es können ein- oder mehrkomponentige Klebstoffe dieser Art benutzt werden. Auch duroplastische Schmelzklebstoffe sind verwendbar, die durch UV-Strahlen härtbar sind.

Anhand der Zeichnung werden Ausführungsformen des Erfindungsgegenstandes erläutert. Es zeigen:
- Fig. 1: eine schematische Seitenansicht, teilweise im Schnitt, einer Vorrichtung zum Herstellen von Chipkarten,
- Fig. 2 + 3: Teilschnitte unterschiedlicher Chipkarten, und
- Fig. 4: einen Ausschnitt einer abgewandelten Vorrichtung.

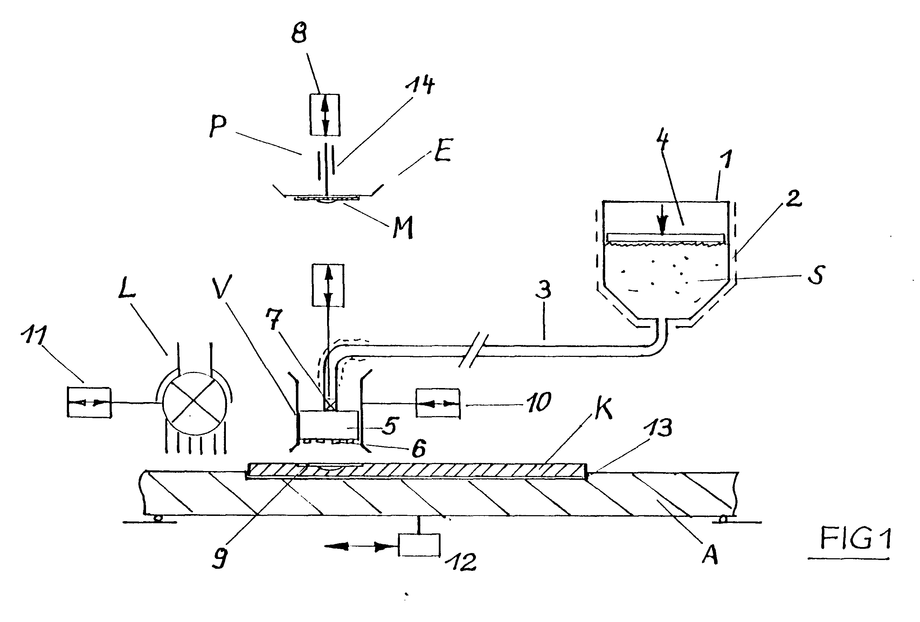

In Fig. 1 ist eine ebene Auflage mit einer Aufnahme 13 für einen Chipkartenkörper K vorgesehen. In einer Einfüge- und Andrückvorrichtung E wird wenigstens ein Chipkartenmodul M bereitgehalten, der in eine Vertiefung 9 eines in der Aufnahme 13 gehaltenen Chipkartenkörpers K einzufügen ist. Obwohl nur ein Chipkartenkörper K gezeigt ist, könnte auch ein Streifen oder ein Bogen mit einer Vielzahl von Chipkartenkörpern K bereitgestellt werden. Der Chipkartenmodul M wird mit einem Halter 14, z.B. einem Saughalter, gehalten und zuvor gegebenenfalls aus einem Einzel-, Flächen-, Streifen- oder Rollenverband (nicht gezeigt) herausgelöst. Der Halter 14 kann mit einem Antrieb 8 in Richtung eines Doppelpfeiles aufund abbewegt werden, um den Chipkartenmodul M in die Vertiefung 9 einzusetzen, ihn dabei zumindest kurzzeitig anzudrükken und genau bündig mit der Oberfläche des Chipkartenkörpers K zu positionieren.

Oberhalb der Auflage A ist eine Dosiereinrichtung V zum dosierenden Auftragen in flüssigem Zustand bereitgestellten Klebstoffes S vorgesehen. Der Klebstoff S ist ein strahlungshärtbarer Klebstoff, vorzugsweise ein durch UV-Licht eienr vorbestimmten Wellenlänge zur Polymerisation aktivierbarer Acrylat- oder Epoxid-Klebstoff. Der Klebstoff S wird in einem mit einer Heizung 2 versehenen Behälter 1 gespeichert, der über eine Leitung 3 mit einem Kopf 5 mit Ausgabeöffnungen 6 verbunden ist. Gegebenenfalls ist in der Leitung 3 ein taktweise betätigbares Ventil 7 oder eine Absperrvorrichtung vorgesehen. Eine Pumpe oder ein Kolben (bei 4 angedeutet) kann zum Fördern des Klebstoffes S vorgesehen sein. Der Kopf 5 läßt sich mit einem Antrieb 10 in mehreren Richtungen, vorzugsweise programmgesteuert, verstellen, um (bei der gezeigten Ausführungsform) mehrere Klebstofftropfen in der Vertiefung 9 aufzubringen.

Ferner ist oberhalb der Auflage A eine Strahlenquelle L vorgesehen, die sich bei der gezeigten Ausführungsform mittels eines Antriebs 11 über die Vertiefung 9 verfahren läßt, den aufgebrachten Klebstoff S kurzzeitig bestrahlt und sofort wieder beiseite bewegbar ist, damit der Chipkartenmodul M sofort unter kurzzeitigen Andrücken in der Vertiefung 9 positioniert werden kann. Das Andrücken kann mittels des Antriebs 8 gesteuert werden.

Es ist möglich, eine getrennte Strahlungsquelle L (UV-Lampe) und eine getrennte Andrückvorrichtung P zu verwenden, die den Chipkartenmodul lokal und kurzzeitig unter flächendeckendem Verteilen des Klebstoffes S eindrückt und positioniert.

Alternativ ist es möglich, den Klebstoff S auf den Chipkartenmodul M aufzutragen, oder, falls zweckmäßig, sowohl auf dne Chipkartenmodul M als auch in der Vertiefung 9 aufzubringen. Dann müßte auch der Chipkartenmodul durch die Strahlenquelle bestrahlbar sein. Es könnte ferner der Kopf 5 stationär gehalten und entweder der Chipkartenkörper K und/oder der Chipkartenmodul M zum Aufbringen des Klebstoffs S zum Kopf 5 betätigt werden.

Das Bestrahlen des Klebstoffes S, das Einfügen des Chipkartenmoduls M und das Eindrücken desselben werden innerhalb einer Zeitspanne von 5 Sek., vorzugsweise innerhalb von ca. 1 bis 2 Sek. durchgeführt. Es ist auch möglich, die Auflage A durch einen Antrieb 12 zwischen zwei Stellungen hin- und herzubewegen, um beim Aufbringen des Klebstoffes in der Vertiefung 9 die Vertiefung zwischen dem Kopf 5 und der Strahlenquelle L hin- und herzuverstellen.

Der Klebstoff S könnte auch aufgesprüht, aufgerakelt, aufgestrichen oder aufgerollt werden.

Zweckmäßigerweise wird der Klebstoff S in Form von Punkten, Strichen, Spuren, Bahnen, gegebenenfalls in einem vorbestimmten Muster, z.B. in einem Polygonzug mit beliebiger n-Eckenkonfiguration aufgebracht.

### Beispiel 1:

Auf vorbestimmte Klebeflächen eines Chipkartenmoduls M aus FR-4-Trägermaterial (Epoximaterial) wird eine Raupe aus dem flüssigen Klebstoff S als rechteckige, geschlossene Spur aufgetragen. Der Modul M wird mit UV-Licht bestrahlt und unmittelbar danach (innerhalb von 2 Sek.) in die Vertiefung 9 des aus Polycarbonat bestehenden Chipkartenkörpers K eingesetzt und angedrückt. Nach der klebstoffspezifischen Aushärtezeit wird eine feste Verbindung zwischen dem Modul und dem Chipkartenkörper erhalten.

### Beispiel 2:

In die Vertiefung 9 des Chipkartenkörpers K, der z.B. aus PVC besteht, werden vier Punkte des Klebstoffs S auf der Grundfläche der Vertiefung 9 aufgebracht. Unmittelbar danach wird der Klebstoff S mit UV-Licht belichtet und der Chipkartenmodul M aus FR-4-Trägermaterial mit seiner Klebefläche eingesetzt und angedrückt.

Die auf diese Weise hergestellten Chipkarten sind unter anderem als Telefon-, Buchungs- und Prozessorkarten und dgl. verwendbar.

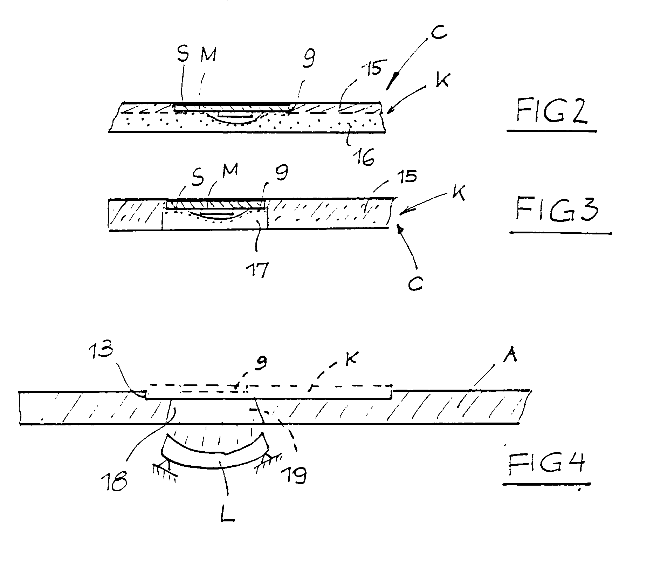

Fig. 2 verdeutlicht einen Ausschnitt einer speziellen Chipkarte C, in deren Chipkartenkörper K der Chipkartenmodul M in der Vertiefung 9 mittels ausgehärteten Klebstoffs S festgelegt ist. Der Chipkartenkörper K besitzt. z.B. eine nicht transparente Vorderseitenschicht 15 und eine für UV-Licht durchlässige, d.h. transparente Rückenschicht 16. Zum Herstellen der Chipkarte C gemäß Fig. 2 wird zunächst auf den Modul M und/oder in der Vertiefung 9 der Klebstoff S aufgetragen, ehe der Modul M eingefügt wird. Dann wird durch die transparente Rückenschicht 16 der Klebstoff M mit UV-Licht bestrahlt und aktiviert. Dabei wird der Modul M endgültig angedrückt und positioniert.

Bei der Chipkarte C gemäß Fig. 3 ist in den aus nicht transparentem Material bestehenden Chipkartenkörper K ein transparentes Fenster 17 inkorporiert, durch das der zuvor aufgebrachte Klebstoff S zum Aktivieren mit UV-Licht bestrahlt wird

Bei der abgeänderten Ausführungsform der Vorrichtung gemäß Fig. 4 ist die Auflage A stationär. Unterhalb der Aufnahme 13, und zwar unterhalb der Vertiefung 9 eines in die Aufnahme 13 eingesetzten Chipkartenkörpers K, ist entweder ein Ausschnitt 18 oder ein transparentes Fenster 19 vorgesehen. Darunter ist die Strahlenquelle L positioniert, um den Klebstoff S beim Einfügen des Chipkartenmoduls M zu aktivieren, d.h. um beispielsweise Chipkarten C nach den Fig. 2 und 3 herzustellen.

## Patentansprüche

1. Verfahren zum Herstellen von Chipkarten, bei denen wenigstens ein Chipkartenmodul in eine Vertiefung (9) eines Chipkartenkörpers (K) eingefügt und mit vor dem Einfügen auf den Chipkartenmodul (M) und/oder in der Vertiefung (9) aufgebrachten flüssigem Klebstoff in der Vertiefung (9) festgeklebt wird, **dadurch gekennzeichnet, dass** ein durch UV-Strahlung und durch Druckbeaufschlagung härtbarer Klebstoff (S) aufgebracht und der Chipkartenmodul (M) beim Einfügen zumindest kurzzeitig angedrückt wird, und dass der Klebstoff unmittelbar vor oder nach dem Einfügen oder vor dem Andrücken mit die Aushärtung einleitender UV-Strahlung behandelt wird.

2. Verfahren nach Anspruch 1, **dadurch gekennzeichnet, dass** der Klebstoff mit einem die Polymerisation bei UV-Strahlenbehandlung kurzzeitig verzögernden Zusatz versetzt wird, um nach dem Bestrahlen des aufgetragenen Klebstoffs bei außerhalb der Vertiefung befindlichem Chipkartenmodul den Chipkartenmodul vor dem Polymerisieren des Klebstoffs einfügen und exakt positionieren und andrücken zu können.

3. Verfahren nach Anspruch 1 oder 2, **dadurch gekennzeichnet, dass** ein ein- oder mehrkomponentiger Acrylat- oder Epoxid-Klebstoff mit UV-Licht vorbestimmter Wellenlänge zur spontanen oder verzögerten Polymerisation aktiviert wird.

4. Verfahren nach wenigstens einem der Ansprüche 1 bis 3, **dadurch gekennzeichnet, dass** der Klebstoff nach dem Einfügen des Chipkartenmoduls durch einen zumindest teilweise transparenten und für die UV-Strahlen durchgängigen Chipkartenkörper hindurch bestrahlt wird

5. Verfahren nach wenigstens einem der Ansprüche 1 bis 4, **dadurch gekennzeichnet, dass** der Klebstoff beim dosierten Aufbringen mit den UV-Strahlen behandelt wird.

6. Verfahren nach den Ansprüchen 1 bis 5, **dadurch gekennzeichnet, dass** das Aufbringen, Bestrahlen und Einfügen innerhalb von 10 Sek., vorzugsweise innerhalb von 1 bis 3 Sek., abgeschlossen werden.

7. Verfahren nach wenigstens einem der Ansprüche 1 bis 6, **dadurch gekennzeichnet, dass** die Chipkarte anschließend an das Festkleben des Chipkartenmoduls einer Wärmebehandlung unterworfen wird.

8. Chipkarte, die nach dem Verfahren gemäß wenigstens einem der Ansprüche 1 bis 7 hergestellt ist, **dadurch gekennzeichnet, dass** der Chipkartenkörper (K) eine transparente Rückenschicht (16) oder in der Rückseite im Bereich der Vertiefung (9) ein transparentes Fenster (17) aufweist.

9. Vorrichtung zum Herstellen von Chipkarten aus wenigstens einem mit zumindest einer Vertiefung (9) versehenen Chipkartenkörper (K) und aus einem in die Vertiefung (9) passenden Chipkarten-Modul (M), mit einer Auflage (A) für den Chipkartenkörper (K), einer Einfügevorrichtung für den Chipkartenmodul (M), und einer Auftrageinrichtung zum dosierten Aufbringen flüssigen Klebstoffs (S) in der Vertiefung (9) und/oder auf dem Chipkartenmodul (M), **dadurch gekennzeichnet, dass** wenigstens eine UV-Strahlenquelle (11) für den durch UV-Strahlung und durch Druckbeaufschlagung härtbaren Klebstoff (S) und eine Andruckvorrichtung (E) für das Chipkartenmodul (M) vorgesehen sind.

10. Vorrichtung nach Anspruch 9, **dadurch gekennzeichnet, dass** die UV-Strahlenquelle (L) und der in der Einfügevorrichtung (E) gehaltene Chipkartenmodul (M) oder der auf der Auflage (A) positionierte Chipkartenkörper (K) relativ zueinander bewegbar sind.

11. Vorrichtung nach Anspruch 9, **dadurch gekennzeichnet, dass** die UV-Strahlenquelle (L) neben der Auftrageinrichtung (V) und der Einfüge- und Andrückvorrichtung (E) oberhalb der Auflage (A) angeordnet ist, und dass die Auflage mit einem Antrieb (12) zwischen zwei Stellungen derart hin- und herbewegbar ist, dass die Vertiefung (9) in der einen Stellung unterhalb der Auftrageinrichtung (V) und in der anderen Stellung unterhalb der Strahlenquelle (L) steht.

12. Vorrichtung nach Anspruch 9, **dadurch gekennzeichnet, dass** die UV-Strahlenquelle (L) unterhalb der Auflage (A) angeordnet und auf die Vertiefung (9) des Chipkartenkörpers (K) ausgerichtet ist, und dass in der Auflage (A) ein für die Strahlen der Strahlenquelle (L) durchlässiges Fenster (19) oder ein Ausschnitt (18) vorgesehen ist.

## Claims

1. Method for manufacturing chip cards, in which at least one chip card module is inserted in a recess (9) in a chip card body (K) and stuck in the recess (9) with liquid adhesive which is applied to the chip card module (M) and/or in the recess (9) before insertion, **characterised in that** an adhesive (S), which can set by means of UV radiation and the action of pressure, is applied and the chip card module (M) is pressed down at least briefly when inserted, and that the adhesive is treated with UV radiation, which initiates setting, immediately before or after the module is inserted or before it is pressed down.

2. Method according to Claim 1, **characterised in that** the adhesive is mixed with an additive which briefly delays polymerisation under UV radiation treatment in order to be able to insert the chip card module, position it exactly and press it down before polymerisation of the adhesive after the applied adhesive has been irradiated with the chip card module located outside of the recess.

3. Method according to Claim 1 or 2, **characterised in that** a one- or multi-component acrylate or epoxy adhesive is activated by UV light of a predetermined wavelength for spontaneous or delayed polymerisation.

4. Method according to at least one of Claims 1 to 3, **characterised in that** the adhesive is irradiated through an at least partly transparent chip card body, which is transmissive to the UV rays, after the chip card module has been inserted.

5. Method according to at least one of Claims 1 to 4, **characterised in that** the adhesive is treated with the UV rays during metered application.

6. Method according to Claims 1 to 5, **characterised in that** the application, irradiation and insertion are concluded within 10 seconds, preferably within 1 to 3 seconds.

7. Method according to at least one of Claims 1 to 6, **characterised in that** the chip card is subjected to a heat treatment after the chip card module has been stuck.

8. Chip card manufactured in accordance with the method according to at least one of Claims 1 to 7, **characterised in that** the chip card body (K) comprises a transparent backing layer (16) or a transparent window (17) in the back in the region of the recess (9).

9. Device for manufacturing chip cards from at least one chip card body (K), which is provided with at least one recess (9), and from a chip card module (M), which fits into the recess (9), with a support (A) for the chip card body (K), an insertion device for the chip card module (M) and an applicator device for the metered application of liquid adhesive (S) in the recess (9) and/or on the chip card module (M), **characterised in that** at least one UV radiation source (11) for the adhesive (S), which can set by means of UV radiation and the action of pressure, and a contact pressure device (E) for the chip card module (M) are provided.

10. Device according to Claim 9, **characterised in that** the UV radiation source (L) and the chip card module (M), which is held in the insertion device (E), or the chip card body (K), which is positioned on the support (A), can move relative to one another.

11. Device according to Claim 9, **characterised in that** the UV radiation source (L) is disposed next to the applicator device (V) and the insertion and contact pressure device (E) above the support (A), and that the support can be reciprocated by a drive between two positions such that the recess (9) lies below the applicator device (V) in one position and below the radiation source (L) in the other position.

12. Device according to Claim 9, **characterised in that** the UV radiation source (L) is disposed below the support (A) and is directed at the recess (9) in the chip card body (K), and that a window (19), which is transmissive to the rays of the radiation source (L), or a cut-out (18) is provided in the support (A).

## Revendications

1. Procédé de fabrication de cartes à puce dans lesquelles au moins un module de carte à puce est inséré dans une cavité (9) d'un corps de carte à puce (K) et est fixé par collage dans la cavité (9) avec une colle liquide appliquée avant l'insertion sur le module de carte à puce (M) et/ou dans la cavité (9), **caractérisé en ce que** l'on applique une colle (S) que l'on peut faire durcir en l'exposant à un rayonnement ultraviolet et à une pression, et l'on exerce une pression, au moins de courte durée, sur le module de carte à puce (M) lors de l'insertion de celui-ci, et que l'on traite la colle avec le rayonnement ultraviolet déclenchant le durcissement, directement avant ou après l'insertion ou avant d'exercer la pression sur le module de carte à puce.

2. Procédé selon la revendication 1, **caractérisé en ce que** l'on mélange la colle avec un additif retardant momentanément la polymérisation lors d'un traitement par rayons ultraviolets afin, après l'exposition de la colle appliquée lorsque le module de carte à puce se trouve à l'extérieur de la cavité, de pouvoir, avant la polymérisation de la colle, insérer, positionner avec exactitude et soumettre à une pression le module de carte à puce.

3. Procédé selon la revendication 1 ou 2, **caractérisé en ce que** l'on active avec une lumière ultraviolette de longueur d'onde prédéterminée une colle époxy ou à base d'acrylate à un ou plusieurs composants pour produire sa polymérisation spontanée ou retardée.

4. Procédé selon au moins l'une des revendications 1 à 3, **caractérisé en ce qu'**après l'insertion du module de carte à puce, on expose la colle à un rayonnement à travers un corps de carte à puce au moins partiellement transparent et laissant passer les rayons ultraviolets.

5. Procédé selon au moins l'une des revendications 1 à 4, **caractérisé en ce que** l'on traite la colle lors de l'application dosée avec les rayons ultraviolets.

6. Procédé selon les revendications 1 à 5, **caractérisé en ce que** l'application, l'exposition et l'insertion sont achevées en 10 secondes, de préférence en 1 à 3 secondes.

7. Procédé selon au moins l'une des revendications 1 à 6, **caractérisé en ce que** la carte à puce, après la fixation par collage du module de carte à puce, est soumise à un traitement thermique.

8. Carte à puce fabriquée suivant le procédé selon au moins l'une des revendications 1 à 7, **caractérisée en ce que** le corps de carte à puce (K) présente une couche arrière (16) transparente ou une fenêtre (17) transparente dans la face arrière, dans la région de la cavité (9).

9. Dispositif de fabrication de cartes à puce formées d'au moins un corps de carte à puce (K) pourvu d'au moins une cavité (9) et d'un module de carte à puce (M) s'adaptant dans la cavité (9), avec un support (A) pour le corps de carte à puce (K), un dispositif d'insertion pour le module de carte à puce (M) et un dispositif d'application pour appliquer de manière dosée une colle (S) liquide dans la cavité (9) et/ou sur le module de carte à puce (M), **caractérisé en ce qu'**il est prévu au moins une source de rayons ultraviolets (L) pour la colle (S) pouvant durcir sous l'action d'un rayonnement ultraviolet et d'une pression et un dispositif de pression (E) pour le module de carte à puce (M).

10. Dispositif selon la revendication 9, **caractérisé en ce que** la source de rayons ultraviolets (L) et le module de carte à puce (M) tenu dans le dispositif d'insertion (E) ou le corps de carte à puce (K) positionné sur le support (A) peuvent être déplacés les uns par rapport aux autres.

11. Dispositif selon la revendication 9, **caractérisé en ce que** la source de rayons ultraviolets (L) est disposée à côté du dispositif d'application (V) et du dispositif d'insertion et de pression (E) au-dessus du support (A) et que le support peut, à l'aide d'un dispositif d'entraînement (12), être déplacé selon un mouvement de va-et-vient entre deux positions de telle sorte que la cavité (9), dans l'une des positions, se trouve au-dessous du dispositif d'application (V), et dans l'autre position, au-dessous de la source de rayons (L).

12. Dispositif selon la revendication 9, **caractérisé en ce que** la source de rayons ultraviolets (L) est disposée au-dessous du support (A) et est dirigée vers la cavité (9) du corps de carte à puce (K) et qu'une découpe (18) ou une fenêtre (19) laissant passer les rayons de la source de rayons (L) est prévue dans le support (A).
